# EUROPÄISCHE PATENTSCHRIFT

(11) **EP 1 595 185 B1**
(45) Veröffentlichungstag und Bekanntmachung des Hinweises auf die Patenterteilung: **31.08.2011**
(21) Anmeldenummer: 04705379.8
(22) Anmeldetag: 27.01.2004
(51) Int. Cl.: G05B 19/05

(54) **ELEKTRISCHES AUTOMATISIERUNGSGERÄT UND VERFAHREN ZUM EINSTELLEN DER FUNKTIONEN DES ELEKTRISCHEN AUTOMATISIERUNGSGERÄTES**
ELECTRIC AUTOMATION DEVICE AND METHOD FOR ADJUSTING THE FUNCTIONS OF THE ELECTRIC AUTOMATION DEVICE
AUTOMATE PROGRAMMABLE ELECTRIQUE ET PROCEDE POUR REGLER LES FONCTIONS DE CET AUTOMATE PROGRAMMABLE ELECTRIQUE

(30) Priorität: 17.02.2003 DE 10307332
(43) Veröffentlichungstag der Anmeldung: 16.11.2005
(73) Patentinhaber: SIEMENS AKTIENGESELLSCHAFT, 80333 München (DE)
(72) Erfinder: LANG, Gerhard, 14557 Wilhelmshorst (DE)
(86) Internationale Anmeldenummer: PCT/DE2004/000158
(87) Internationale Veröffentlichungsnummer: WO 2004/072743

(56) Entgegenhaltungen:
- EP-A- 1 256 861
- EP-B- 0 852 031
- WO-A-97/03389
- DE-A- 10 021 838
- DE-A- 19 740 775
- DE-A- 19 826 169
- DE-A1- 3 808 135
- DE-A1- 19 845 764
- HOLTKAMP E: "DAS ZWEITE LEBEN DER SPS. LOEST DIE SOFTWARE-SPS DIE KLASSISCHE SPSAB?" ELEKTRONIK, FRANZIS VERLAG GMBH. MUNCHEN, DE, Bd. 47, Nr. 8, 14. April 1998 (1998-04-14), Seiten 50-54, XP000780188 ISSN: 0013-5658
- STAIS H ET AL: "MODULAR ERWEITERBARE SPS: AUSBAUFAHIG MIT GROSSEM FUNKTIONSVORRAT" ELEKTRONIK, FRANZIS VERLAG GMBH. MUNCHEN, DE, Bd. 39, Nr. 3, 2. Februar 1989 (1989-02-02), Seiten 92-94, XP000126496 ISSN: 0013-5658

## Beschreibung

Die Erfindung betrifft ein elektrisches Automatisierungsgerät mit einer von einem Rechner gesteuerten Steuereinrichtung.

Elektrische Automatisierungsgeräte, wie beispielsweise elektrische Schutz- oder Feldleitgeräte der Stationsautomatisierungstechnik, weisen üblicherweise rechnergesteuerte Steuereinrichtungen auf. Mit Hilfe einer in der Steuereinrichtung installierten Software können die jeweiligen Funktionen eines solchen Automatisierungsgerätes festgelegt und ausgeführt werden. Die Software ist üblicherweise in die Steuereinrichtung des elektrischen Automatisierungsgerätes vollständig eingebettet und bildet mit dieser ein sogenanntes "Embedded System". Ein weiteres Beispiel für bekannte Automatisierungsgeräte der oben angegebenen Art sind softwaregesteuerte Fertigungsroboter.

Nimmt man als elektrisches Automatisierungsgerät beispielsweise ein elektrisches Schutzgerät, spezieller ein Distanzschutzgerät, an, so können in der Software beispielsweise Anweisungen bezüglich der Distanzschutzfunktionen des Automatisierungsgerätes und Kommunikationsanweisungen enthalten sein. Eine genaue Festlegung der Funktionen des Automatisierungsgerätes wird durch den Anwender des Automatisierungsgerätes bereits zum Zeitpunkt der Bestellung des Automatisierungsgerätes bei dessen Hersteller getroffen.

Bisherige elektrische Automatisierungsgeräte, insbesondere im Bereich der Schutz- und Feldleitgeräte, werden vom Hersteller mit einem gerätebezogenen Software-Paket ganzheitlich entwickelt und müssen im vollen Umfang auf Richtigkeit und Zuverlässigkeit aller Funktionen getestet werden. Ein solches Vorgehen ist mit einem erheblichen Kosten- und Zeitaufwand verbunden.

In der europäischen Patentanmeldung EP 1 256 861 wird ein Verfahren zum Programmieren speicherprogrammierbarer Steuerungen beschrieben. Die Programmierung erfolgt über ein Web Access Module, das über Internet mit einem Personalcomputer verbunden ist

Ausgehend von einem elektrischen Automatisierungsgerät der eben beschriebenen Art liegt der Erfindung die Aufgabe zugrunde, ein elektrisches Automatisierungsgerät anzugeben, das flexibel und mit reduziertem Testaufwand an vorgegebene Funktionen anpassbar ist.

Zur Lösung dieser Aufgabe wird bei einem elektrischen Automatisierungsgerät der oben genannten Art vorgeschlagen, dass eine Rechner-Hardware unter Bildung eines Automatisierungs-Grundgerätes mit einer Steuersoftware ausgestattet ist, die einen ein Betriebssystem, Gerätetreiber und Kommunikationsmodule umfassenden Basisfunktionsbereich aufweist, und dass das Automatisierungs-Grundgerät durch über eine Softwareschnittstelle mit dem Basisfunktionsbereich verbindbare beliebige Anwendungsbausteine zum Automatisierungsgerät vervollständigt ist.

Der wesentliche Vorteil des erfindungsgemäßen Automatisierungsgerätes ist, dass zunächst gleichartige, mit allen Automatisierungsgeräten gemeinsamen Komponenten (z.B. Betriebssystem, Gerätetreiber, Kommunikationsmodule) ausgestattete Automatisierungs-Grundgeräte in Serie erzeugt und unter Verwendung von verschiedenen Anwendungsbausteinen beliebig - also flexibel - an geforderte Funktionen angepasst werden können. Durch diese Anpassung wird das jeweilige Automatisierungs-Grundgerät jeweils zum eigentlichen Automatisierungsgerät komplettiert. Als Gerätetreiber werden in diesem Zusammenhang Programme zur softwaretechnischen Ansteuerung weiterer elektronischer Geräte des jeweiligen elektrischen Automatisierungsgerätes angesehen; Kommunikationsmodule regeln z. B. die interne Gerätekommunikation zwischen dem Basisfunktionsbereich der Steuersoftware und beliebigen über die Softwareschnittstelle mit dem Basisfunktionsbereich verbindbaren Anwendungsbausteinen.

Die Anwendungsbausteine können dabei modulartig über die Softwareschnittstelle in die Steuersoftware eingebunden werden. Die endgültigen Funktionen des Automatisierungsgerätes werden durch die Auswahl dieser Anwendungsbausteine bestimmt.

Das gesamte Automatisierungs-Grundgerät bleibt bei der Erzeugung beliebiger Automatisierungsgeräte weitgehend unverändert; daher müssen - bei Verwendung erprobter Automatisierungs-Grundgeräte - keine weiteren Funktionstests bezüglich der Komponenten des Automatisierungs-Grundgerätes durchgeführt werden, was den Testaufwand für das jeweilige Automatisierungsgerät deutlich reduziert.

Gemäß einer vorteilhaften Ausführungsform des erfindungsgemäßen Automatisierungsgerätes sind für die verschiedenen Funktionen des Automatisierungsgerätes entsprechend verschiedene Anwendungsbausteine vorhanden. Die Anwendungsbausteine stellen nach dieser Ausführungsform vorteilhafterweise für sich abgeschlossene Funktionseinheiten dar, die jeweils eine Funktion (z.B. externe Kommunikation, Schutzfunktionen, Zeitschaltungen) des elektrischen Automatisierungsgerätes übernehmen. Da als Anwendungsbausteine zudem erprobte Anwendungsbausteine eingesetzt werden können, verringert sich der Testaufwand für das endgültige Automatisierungsgerät durch diese Ausführungsform nochmals deutlich.

Das elektrische Automatisierungsgerät kann beispielsweise ein elektrisches Schutz- oder Leitgerät sein. Solche Geräte beinhalten eine Vielzahl verschiedenster Funktionen, so dass eine erfindungsgemäße Ausgestaltung mit flexibler Funktionsanpassung hierbei von großem Interesse ist.

Aufgabe der Erfindung ist es auch, ein Verfahren anzugeben, mit dem ein elektrisches Automatisierungsgerät bezüglich vorgegebener Funktionen flexibel hergestellt werden kann.

Zur Lösung dieser Aufgabe wird ein Verfahren zum Einstellen der Funktionen eines elektrischen Automatisierungsgerätes mit einer einen Rechner aufweisenden Steuereinrichtung, wobei folgende Schritte durchgeführt werden: Übertragen zumindest eines unter Verwendung eines Ausgangs-Anwendungsbausteins modifizierten Anwendungsbausteins an ein Automatisierungs-Grundgerät, das mit einer Rechner-Hardware und einer Steuersoftware, die einen ein Betriebssystem, Gerätetreiber und Kommunikationsmodule umfassenden Basisfunktionsbereich aufweist, ausgestattet ist, und Ausführen von Einstellungsanweisungen des zumindest einen modifizierten Anwendungsbausteins unter Vervollständigung des elektrischen Automatisierungsgerätes, wobei der zumindest eine modifizierte Anwendungsbaustein unter Einstellen zumindest einer Funktion des Automatisierungsgerätes in die Steuersoftware eingebunden wird.

Auf diese Weise kann unter Verwendung von modulartigen jeweils eine einzige Funktion des Automatisierungsgerätes beschreibenden modifizierten Anwendungsbausteinen ein Automatisierungsgerät flexibel an vorgegebene Funktionen angepasst hergestellt werden. Ferner ist es hierdurch vorteilhaft möglich, bei Vorliegen eines einzigen modifizierten Anwendungsbausteines eine ganze Serie gleichartiger Automatisierungsgeräte zu erzeugen; hierzu muss der modifizierte Anwendungsbaustein (oder jeweils eine Kopie davon) nur an alle Automatisierungs-Grundgeräte dieser Serie übertragen werden.

Vorteilhafterweise kann zum Erzeugen des modifizierten Anwendungsbausteins zumindest ein Konfigurations- und Einstellungsanweisungen aufweisender Ausgangs-Anwendungsbausteins in einen Speicherbereich einer das Automatisierungs-Grundgerät simulierenden Datenverarbeitungseinrichtung geladen werden und die Konfigurationsanweisungen des zumindest einen Ausgangs-Anwendungsbausteins mittels der Datenverarbeitungseinrichtung unter Bilden des modifizierten Anwendungsbausteins bei Festlegen der Funktionen des elektrischen Automatisierungsgerätes ausgeführt werden.

Durch die Ausführung von in dem Ausgangs-Anwendungsbaustein bereits enthaltenen Konfigurationsanweisungen auf einer Datenverarbeitungseinrichtung, die ein Automatisierungs-Grundgerät simuliert, können vorteilhafterweise alle wesentlichen Einstellungen bezüglich der verschiedenen - durch die jeweiligen Anwendungsbausteine gebildeten - Funktionen des zu erzeugenden Automatisierungsgerätes bereits außerhalb des Automatisierungs-Grundgerätes vorgenommen werden. Eine Datenverarbeitungseinrichtung bietet nämlich üblicherweise eine deutlich komfortablere und bezüglich ihrer Funktionalität leistungsfähigere Umgebung als die Automatisierungs-Grundgeräte.

Weiterhin kann vorteilhaft vorgesehen sein, dass für den zumindest einen Ausgangs-Anwendungsbausteins das XML-Format verwendet wird. Im XML-Format lassen sich auf einfache Weise strukturierte Daten und Anweisungen für die Steuersoftware erzeugen.

Eine weitere Lösung der Aufgabe bezüglich des Verfahrens wird durch ein Verfahren zum Einstellen der Funktionen eines elektrischen Automatisierungsgerätes mit einer einen Rechner aufweisenden Steuereinrichtung angegeben, wobei folgende Schritte durchgeführt werden: Laden zumindest eines Konfigurations- und Einstellungsanweisungen aufweisenden Ausgangs-Anwendungsbausteins in einen Speicherbereich der Steuereinrichtung, die mit einer Bteuersoftware eines eine Rechner-hardware enthaltenden Automatisierungs-Grundgerätes zusammen wirkt, wobei die Steuersoftware einen ein Betriebssystem, Gerätetreiber und Kommunikationsmodule umfassenden Basisfunktionsbereich aufweist, Ausführen der Konfigurationsanweisungen des zumindest einen Ausgangs-Anwendungsbausteins mittels der Steuereinrichtung unter Bilden eines modifizierten Anwendungsbausteins bei Festlegen der Funktionen des elektrischen Automatisierungsgerätes und Ausführen der Einstellungsanweisungen des zumindest einen modifizierten Anwendungsbausteins unter Vervollständigung des elektrischen Automatisierungsgerätes, wobei der zumindest eine modifizierte Anwendungsbaustein unter Einstellen zumindest einer Funktion des Automatisierungsgerätes in die Steuersoftware eingebunden wird.

Auf diese Weise können vorteilhaft insbesondere solche Automatisierungs-Grundgeräte bezüglich ihrer Funktionen zu einem Automatisierungsgerät vervollständigt werden, die ähnlich leistungsfähige Bedienmöglichkeiten und Funktionalitäten wie eine übliche Datenverarbeitungseinrichtung aufweisen.

Zur weiteren Erläuterung der Erfindung sind in
- Figur 1: schematisch der Aufbau eines Ausführungsbeispiels des erfindungsgemäßen eines elektrischen Automati- sierungsgerätes, in
- Figur 2: schematisch ein Ausführungsbeispiel eines erfin- dungsgemäßen Verfahrens zum Einstellen der Funktio- nen eines elektrischen Automatisierungsgerätes und in
- Figur 3: ein weiteres Ausführungsbeispiel eines weiteren er- findungsgemäßen Verfahrens zum Einstellen der Funk- tionen eines elektrischen Automatisierungsgerätes
dargestellt.

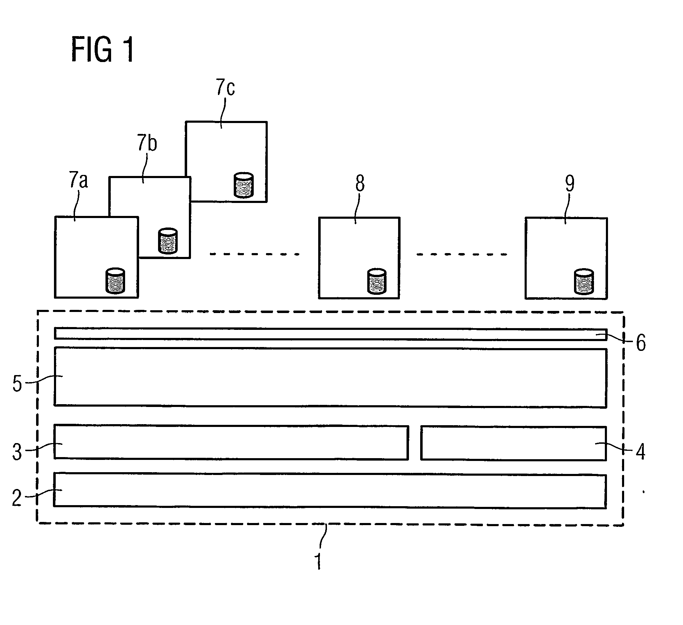

Figur 1 zeigt schematisch den Aufbau eines elektrischen Automatisierungsgerätes. Hierbei umfasst ein sogenanntes Automatisierungs-Grundgerät 1 eine Rechnerhardware 2, die mit einer Steuersoftware mit einem Basisfunktionsbereich, bestehend aus einem Betriebssystem 3, Gerätetreibern 4 und Kommunikationsmodulen 5, ausgestattet ist. Als Rechnerhardware 2 kann in diesem Fall sowohl ein einzelner Rechenbaustein, wie beispielsweise ein Mikroprozessor, als auch ein System aus mehreren Schaltungsbausteinen, wie beispielsweise verschiedenen Prozessoren und Coprozessoren fungieren. Die Steuersoftware weist ferner eine Softwareschnittstelle 6 auf.

Ein solches Automatisierungs-Grundgerät 1 weist allerdings noch keine für das eigentliche Automatisierungsgerät spezifischen Funktionen auf; es stellt hingegen eine Art Basisgerät für Automatisierungsgeräte dar. Zur Realisierung spezifischer Funktionen können über die Softwareschnittstelle 6 einzelne Anwendungsbausteine 7a, 7b, 7c, 8 und 9 mit dem Basisfunktionsbereich der Steuersoftware verbunden werden.

Dies soll anhand des folgenden Beispiels näher erläutert werden. Als elektrisches Automatisierungsgerät werde ein elektrisches Schutzgerät zum Schutz und zur Überwachung von elektrischen Betriebsmitteln wie elektrischen Energieversorgungsleitungen oder elektrischen Maschinen angenommen. Das elektrische Schutzgerät liege zunächst in der Form eines Automatisierungs-Grundgerätes 1 vor. Ein solches Automatisierungs-Grundgerät 1 weist noch keine für ein elektrisches Schutzgerät spezifischen Funktionen auf. Vielmehr stellt es ein Basisgerät dar, das eine flexible Grundlage für ein beliebig hinsichtlich seiner Funktionen anpassbares Schutzgerät bildet. So ist es für einen Hersteller elektrischer Schutzgeräte beispielsweise möglich, ein (bereits vorhandenes) elektrisches Automatisierungs-Grundgerät 1 vergleichsweise unkompliziert mit einem von einem Kunden gewünschten Funktionsumfang auszustatten.

Um das Automatisierungs-Grundgerät 1 zu einem Schutzgerät mit seinen jeweiligen spezifischen Funktionen zu vervollständigen, lässt es sich nämlich mit verschiedenartigen Anwendungsbausteinen 7a, 7b, 7c, 8, 9 ausstatten, die jeweils für sich eine einzelne Funktion des elektrischen Schutzgerätes darstellen. Diese Anwendungsbausteine 7a, 7b, 7c, 8, 9 lassen sich über die Softwareschnittstelle 6 mit dem Basisfunktionsbereich der Steuersoftware verbinden. Solche Softwareschnittstellen (auch "API" = "application program interface" genannt) sind dem Fachmann an sich bekannt; sie können entweder aus einer einzigen zentralen Softwareschnittstelle oder beispielsweise auch aus verschiedenen verteilten Softwareteilschnittstellen gebildet sein.

Im Falles des Schutzgerätes können beispielsweise die Anwendungsbausteine 7a, 7b und 7c (vgl. Figur 1) einzelne Schutzalgorithmen und Schutzverfahren des elektrischen Schutzgerätes beinhalten, so z. B. einen Überstromzeitschutz. Ein weiterer Anwendungsbaustein 8 kann ein Aufzeichnungsbaustein zum Aufzeichnen ausgewählter Spannungs- oder Stromverläufe sein, wiederum ein weiterer Anwendungsbaustein 9 kann Kommunikationsmodalitäten mit einem externen Gerät, beispielsweise einem Messwandler, beinhalten. Durch die Auswahl entsprechender Anwendungsbausteine kann der Funktionsumfang eines elektrischen Schutzgerätes wie in einem Baukastensystem beliebig erstellt, erweitert oder angepasst werden.

Neben dem modulartigen und flexiblen Aufbau ist insbesondere der reduzierte Testaufwand für das elektrische Schutzgerät bzw. das elektrische Automatisierungsgerät von besonderem Vorteil. Muss nämlich bei einem Automatisierungsgerät nach dem Stand der Technik, das je nach Anwendungsfall speziell mit einem eigens hierfür entwickelten kompletten Softwarepaket ausgestattet ist, ein Testlauf aller Funktionen und Komponenten (Hardware und Software) des Automatisierungsgerätes durchgeführt werden, so kann bei dem erfindungsgemäßen Automatisierungsgerät beispielsweise das Automatisierungs-Grundgerät 1 bereits in einer getesteten und erprobten Form vorliegen, so dass für diesen Bereich inklusive Rechner-Hardware 2, Betriebssystem 3, Gerätetreibern 4 und Kommunikationsmodulen 4 folglich der Testaufwand eingespart wird. Ferner ist es auch möglich, die einzelnen Anwendungsbausteine 7a, 7b, 7c, 8, 9 in einer vorkonfektionierten und getesteten Form bereits vorliegen zu haben, so dass nur nach der Vervollständigung des Automatisierungs-Grundgerätes 1 durch die entsprechenden Anwendungsbausteine 7a, 7b, 7c, 8, 9 zum Automatisierungsgerät ein Funktionstest der spezifischen Gerätefunktionen durchgeführt werden muss. Hierdurch lassen sich kosten- und zeitaufwendige Testläufe deutlich reduzieren.

Der Informationsinhalt der Anwendungsbausteine kann beispielsweise in einer auf dem XML-Format beruhenden Form vorliegen. In dem XLM-Format lassen sich in einer geräteunabhängigen Form Daten und Informationen strukturiert angeben. Eine "Übersetzung" des XML-Formats kann beispielsweise durch die Kommunikationsmodule 5 oder das Betriebssystem 2 des Basisfunktionsbereiches der Steuersoftware gewährleistet werden.

Besonders vorteilhaft kann der beschriebene Aufbau eines elektrischen Automatisierungsgerätes dann eingesetzt werden, wenn sich Hersteller und Nutzer solcher Automatisierungsgeräte auf einen einheitlichen Standard für die Darstellung und die Modellierung von Daten und Informationen sowie deren Kommunikation zwischen einzelnen Geräten geeinigt haben. Dies wird voraussichtliche mit der Norm IEC 61850 erfüllt. Die IEC Norm 61850 regelt u. a. das Datenmodell des Anwendungsbereiches von Automatisierungsgeräten, so dass bei Verwendung normkonformer Ausgestaltungen eine Kompatibilität von Geräten und Steuersoftware unterschiedlicher Hersteller vorteilhaft gesichert ist.

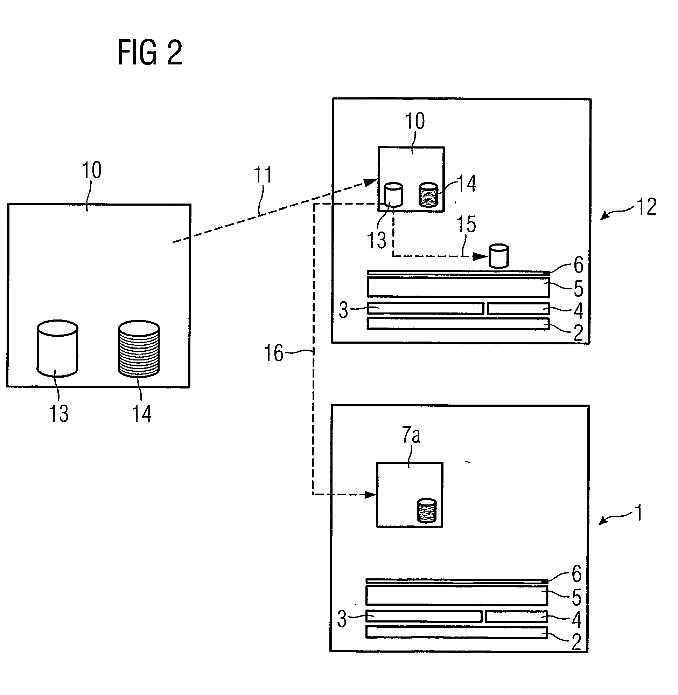

Figur 2 zeigt schematisch ein Verfahren zum Herstellen bzw. Einstellen der spezifischen Funktionen eines elektrischen Automatisierungsgerätes. Das Verfahren soll beispielhaft für den Anwendungsbaustein 7a gemäß Figur 1 erläutert werden.

Ein zunächst vorliegender (Software-) Ausgangs-Anwendungsbaustein 10 enthalte Konfigurationsanweisungen 13 und Einstellungsanweisungen 14. Dieser Ausgangs-Anwendungsbaustein 10 wird in einem durch einen strichlierten Pfeil 11 angedeuteten Ladevorgang in einen Speicherbereich einer Datenverarbeitungseinrichtung 12 geladen.

Die Datenverarbeitungseinrichtung 12, die beispielsweise ein entsprechend eingerichteter PC sein kann, simuliert darüber hinaus ein Automatisierungs-Grundgerät 1 (vgl. Figur 1) mit einer Rechnerhardware 2, einem Betriebssystem 3, Gerätetreibern 4 und Kommunikationsmodulen 5.

In einem nun folgenden Konfigurationsschritt werden die Konfigurationsanweisungen 13 des Ausgangs-Anwendungsbausteins 10 ausgeführt, was durch einen weiteren Pfeil 15 angedeutet wird. Durch das Ausführen der Konfigurationsanweisungen 13 wird der Ausgangs-Anwendungsbaustein 10 über die Softwareschnittstelle 6 in die Steuersoftware des simulierten Automatisierungs-Grundgerätes eingebunden. Gleichzeitig werden Einstellungen beispielsweise bezüglich der Aktivierung des Ausgangs-Anwendungsbausteins 10, seiner Bedienungsanzeige und wesentlicher Parameter durchgeführt. Derzeit findet ein solcher Vorgang beim Hersteller eines elektrischen Automatisierungsgerätes statt.

Nachdem im Rahmen des simulierten Automatisierungs-Grundgerätes der Ausgangsanwendungsbaustein 10 auf diese Weise mit dem Basisfunktionsbereich der Steuersoftware verbunden ist, stellt er einen modifizierten Anwendungsbaustein dar. Dieser wird in der nun vorliegenden Form an ein (reales) Automatisierungs-Grundgerät 1 (vgl. Figur 1) übertragen (siehe Pfeil 16). Dort kann der modifizierte Anwendungsbaustein 7a in einfacher Weise über die Softwareschnittstelle 6 mit dem Basisfunktionsbereich der Steuersoftware verbunden werden. Besonders vorteilhaft hieran ist, dass die einmal auf der Datenverarbeitungseinrichtung 12 getroffenen Einstellungen nicht nochmals am Automatisierungs-Grundgerät 1 wiederholt werden müssen. Der modifizierte Anwendungsbaustein 7a wird so, wie er nach Ausführen des Konfigurationsanweisungen 13 auf der Datenverarbeitungseinrichtung 12 vorgelegen hat, in das Automatisierungs-Grundgerät 1 übernommen. Abschließend können die bereits im Ausgangs-Anwendungsbaustein 10 und auch noch im modifizierten Anwendungsbaustein 7a vorhandenen Einstellungsanweisungen 14 ausgeführt werden, um letzte Einstellungen vorzunehmen. Üblicherweise hat der Anwender eines Automatisierungsgerätes Zugriff auf diese Einstellungsanweisungen 14, um beispielsweise eine spezielle Funktion an äußere Gegebenheiten anzupassen. Der Anwender kann solche Einstellungen auch später nochmals verändern, so dass z.B. auf diese Weise ein elektrisches Schutzgerät an veränderte Leitungsbedingungen einer zu überwachenden Energieübertragungsleitung angepasst werden kann, wie beispielsweise eine Änderung der Leitungslänge oder des Widerstands der Energieübertragungsleitung.

Nach Ausführen dieser letzten Einstellungsanweisungen 14 ist das Automatisierungs-Grundgerät zum eigentlichen Automatisierungsgerät mit seinem geforderten Funktionsumfang vervollständigt.

Zum Erzeugen mehrerer gleichartiger Automatisierungsgeräte aus gleichartigen Automatisierungsgrundgeräten 1 kann der beschriebene Vorgang mehrfach mit immer neuen AutomatisierungsGrundgeräten wiederholt werden. Besonders vorteilhaft ist es aber, ein einziges Mal, wie oben beschrieben, einen modifizierten Anwendungsbaustein (beispielsweise 7a) zu erzeugen und diesen an mehrere Automatisierungs-Grundgeräte 1 zu übertragen. Auf diese Weise kann der Erzeugungsaufwand mehrerer gleichartiger modifizierter Anwendungsbausteine eingespart werden.

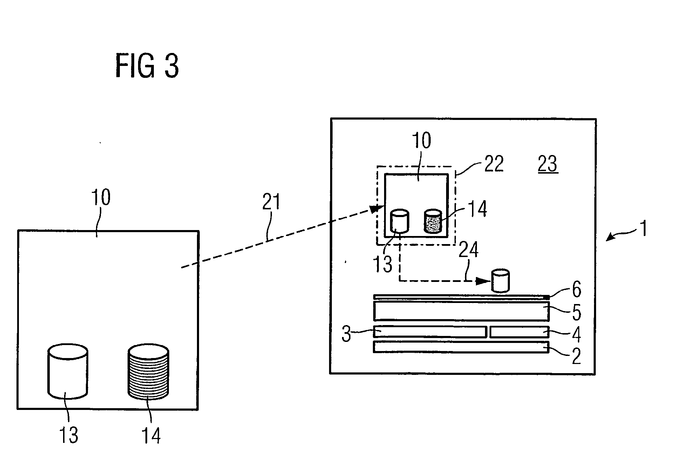

Alternativ zu dem eben erläuterten Einstellungsverfahren kann auch vorgesehen sein, den Ausgangs-Anwendungsbaustein 10 direkt in das Automatisierungs-Grundgerät 1 zu laden und dort sowohl die Konfigurationsanweisungen 13 als auch die Einstellungsanweisungen 14 auszuführen. Dies ist in Figur 3 dargestellt. Hier wird der Ausgangs-Anwendungsbaustein in einem durch einen strichlierten Pfeil 21 dargestellten Ladevorgang in einen Speicherbereich 22 der Steuereinrichtung 23 des Automatisierungs-Grundgerätes 1 geladen. Dort werden zunächst die Konfigurationsanweisungen 13 des Ausgangs-Anwendungsbausteins 10 ausgeführt, wie dies durch Pfeil 24 angedeutet ist. Hierbei findet - wie im Zusammenhang mit Figur 2 erläutert - zum einen eine Festlegung des Funktionsumfangs des Automatisierungsgerätes durch Auswahl der entsprechenden Ausgangs-Anwendungsbausteine und eine Einbindung des jeweiligen Ausgangs-Anwendungsbausteins in das Automatisierungs-Grundgerät 1 statt. Gleichzeitig werden Einstellungen bezüglich der Aktivierung des Ausgangs-Anwendungsbausteins 10, seiner Bedienungsanzeige und wesentlicher Parameter durchgeführt. Durch diesen Vorgang wird der Ausgangs-Anwendungsbaustein zum modifizierten Anwendungsbaustein.

Nachfolgend werden mit demselben Automatisierungs-Grundgerät die Einstellungsanweisungen 14 des modifizierten Anwendungsbausteins ausgeführt und somit die Einstellungen zur Anpassung an äußere Gegebenheiten vorgenommen (wie auch im Zusammenhang mit Figur 2 erläutert), womit das Automatisierungs-Grundgerät zum eigentlichen Automatisierungsgerät vervollständigt wird.

Eine solche Vorgehensweise eignet sich insbesondere, wenn als Automatisierungs-Grundgerät ein vergleichsweise gut zu bedienendes Automatisierungs-Grundgerät vorliegt. Beispielsweise kann ein solches Automatisierungs-Grundgerät durch einen Industrie-PC gebildet sein. In diesem Fall können auch auf der Anwenderseite durch Auswahl verschiedener Ausgangs-Anwendungsbausteine und deren Integration in das Automatisierungs-Grundgerät Automatisierungsgeräte mit den gewünschten Funktionen erzeugt werden. Die notwendigen Ausgangs-Anwendungsbausteine kann der Anwender hierbei beispielsweise speziellen Software-Bibliotheken in Form standardisierter Anwendungsbausteine entnehmen.

## Patentansprüche

1. Verfahren zum Einstellen der Funktionen eines elektrischen Automatisierungsgerätes, das eine einen Rechner aufweisende Steuereinrichtung aufweist, wobei folgende Schritte durchgeführt werden:
- Laden zumindest eines Konfigurations- und Einstellungsanweisungen (13, 14) aufweisenden Ausgangs-Anwendungsbausteins (10) in einen Speicherbereich einer ein Automatisierungs-Grundgerät simulierenden Datenverarbeitungseinrichtung (12);
- Bilden eines modifizierten Anwendungsbausteins (7a) aus dem zumindest einen Ausgangs-Anwendungsbaustein (10), indem die Konfigurationsanweisungen (13) des zumindest einen Ausgangs-Anwendungsbausteins (10) mittels der Datenverarbeitungseinrichtung (12) ausgeführt werden, wobei der Ausgangs-Anwendungsbaustein (10) über eine Softwareschnittstelle (6) in eine Steuersoftware des von der Datenverarbeitungseinrichtung simulierten Automatisierungs-Grundgerätes eingebunden wird und Einstellungen bezüglich einer Aktivierung des Ausgangs-Anwendungsbausteins (10), seiner Bedienungsanzeige und seiner Parameter durchgeführt werden und wobei der modifizierte Anwendungsbaustein (7a) eine spezifische Funktion des einen Automatisierungsgerätes darstellt;
- Übertragen des modifizierten Anwendungsbausteins (7a) an das Automatisierungs-Grundgerät (1), das mit einer Rechner-Hardware (2) und einer Steuersoftware, die einen ein Betriebssystem (3), Gerätetreiber (4) und Kommunikationsmodule (5) umfassenden Basisfunktionsbereich aufweist, ausgestattet ist;
- Verbinden des zumindest einen modifizierten Anwendungsbausteins (7a) über eine Softwareschnittstelle (6) mit dem Basisfunktionsbereich der Steuersoftware; und
- Ausführen der Einstellungsanweisungen (14) zur Anpassung der spezifischen Funktion des zumindest einen modifizierten Anwendungsbausteins (7a) an äußere Gegebenheiten unter Vervollständigung des elektrischen Automatisierungsgerätes.

2. Verfahren nach Anspruch 1,
**dadurch gekennzeichnet,**
- **dass** für den zumindest einen Ausgangs-Anwendungsbaustein (10) das XML-Format verwendet wird.

## Claims

1. Method for adjusting the functions of an electric automation device which has a control unit comprising a computer, the following steps being carried out:
- loading at least one starting application module (10), comprising configuration and adjustment instructions (13, 14), into a memory area of a data processing unit (12) simulating a basic automation device;
- forming a modified application module (7a) from the at least one starting application module (10) by performing the configuration instructions (13) of the at least one starting application module (10) by means of the data processing unit (12), the starting application module (10) being incorporated via a software interface (6) in a control software component of the basic automation device simulated by the data processing unit, and adjustments being carried out with respect to an activation of the starting application module (10), the operator display thereof and the parameters thereof, and the modified application module (7a) representing a specific function of the one automation device;
- transferring the modified application module (7a) to the basic automation device (1), which is equipped with a computer hardware component (2) and a control software component, which has a basic functional area comprising an operating system (3), device drivers (4) and communication modules (5);
- connecting the at least one modified application module (7a) via a software interface (6) to the basic functional area of the control software component; and
- performing the adjustment instructions (14) so as to adapt the specific function of the at least one modified application module (7a) to external conditions while completing the electric automation device.

2. Method according to Claim 1, **characterized in that** the XML format is used for the at least one starting application module (10).

## Revendications

1. Procédé de réglage des fonctions d'un appareil d'automatisation électrique, qui comporte un dispositif de commande ayant un ordinateur, dans lequel on effectue les stades suivantes :
- on charge au moins un module ( 10 ) d'application de sortie ayant des instructions ( 13, 14 ) de configuration et de réglage dans une zone de mémoire d'un dispositif ( 12 ) de traitement de données simulant un appareil de base d'automatisation ;
- on forme un module ( 7a ) d'application modifié à partir du au moins un module ( 10 ) d'application de sortie, en exécutant les instructions ( 13 ) de configuration du au moins un module ( 10 ) d'application de sortie au moyen du dispositif ( 12 ) de traitement de données, le module ( 10 ) d'application de sortie étant incorporé par une interface logicielle dans un logiciel de commande de l'appareil de base d'automatisation simulé par le dispositif de traitement de données et des réglages concernant une activation du module ( 10 ) d'application de sortie, son indication de service et ses paramètres sont effectués et dans lequel le module ( 7a ) d'application modifié représente une fonction spécifique du un appareil d'automatisation ;
on transmet le module 7a d'application modifié à l'appareil (1) de base d'automatisation, qui est équipé d'un matériel d'ordinateur et d'un logiciel de commande, qui comprend une zone de fonction de base comprenant un système ( 3 ) d'exploittion, des pilotes ( 4 ) d'appareil et des modules ( 5 ) de communication ;
- on relie le au moins un module ( 7a ) d'application modifiée par une interface ( 6 ) logicielle à la zone de fonction de base du logiciel de commande ;
- on exécute les instructions ( 14 ) de réglage pour l'adaptation de la fonction spécifique du au moins un module ( 7a ) d'application modifié à des conditions extérieures en complétant l'appareil d'automatisation électrique.

2. Procédé suivant la revendication 1,
**caractérisé**
- **en ce qu**'on utilise le format XML pour le au moins un module ( 10 ) d'application de sortie.
